# EUROPEAN PATENT APPLICATION

(11) **EP 4 477 874 A1**
(43) Date of publication of application: **18.12.2024**
(21) Application number: 23179405.8
(22) Date of filing: 15.06.2023
(51) Int. Cl.: F03D 9/19, F03D 13/25

(54) **OFFSHORE WIND TURBINE**

(71) Applicant: Siemens Gamesa Renewable Energy A/S, 7330 Brande (DK)
(72) Inventor: SOYLU, Mahmut Erbil, 4700 Naesrved (DK)
(74) Representative: SGRE-Association

(57) **Abstract**

An offshore wind turbine (1), comprising
a generator (5) for generating electrical power by wind power,
a tower (7) with a platform (12), and
an ammonia production apparatus (14) arranged on the platform (12) for producing ammonia (NH₃) by means of the generated electrical power.

Thus, electrical power produced by the generator of the wind turbine can be converted on-site into ammonia. Hence, so-called green ammonia can be produced at the location of the offshore wind turbine.

## Description

The present invention relates to an offshore wind turbine.

Hydrogen gas produced from renewable energies such as wind power provides a so-called green hydrogen that can replace fossil fuels. For example, green hydrogen gas can be used in fuel cell vehicles.

Recently, the concept of decentralized hydrogen production on an outside platform of an offshore wind turbine has been studied (e.g., EP 4 067 534 A1). Hence, such a wind turbine can produce and deliver electrical energy as well as hydrogen gas. A hydrogen production device of such an offshore wind turbine typically comprises an electrolysis unit which converts water (e.g., desalinated seawater) into hydrogen by means of electrical energy generated by the wind turbine. The decentralized offshore hydrogen wind turbines can potentially work in two different modes. In a first mode, the wind turbine delivers only hydrogen. In a second hybrid mode, the wind turbine delivers both electrical energy and hydrogen gas.

Hydrogen gas produced by the wind turbine at the offshore site has to be either transported to another offshore or onshore installation or stored temporarily at the offshore wind turbine. However, the storage of hydrogen gas is difficult due to its low density. In particular, storing hydrogen as a high-pressure gas requires significant energy for compression and constitutes a significant safety challenge. Storing, on the other hand, hydrogen as a liquid faces the challenge of its very low boiling point at atmospheric pressure.

It is one object of the present invention to provide an improved offshore wind turbine.

Accordingly, an offshore wind turbine is provided. The offshore wind turbine comprises:
a generator for generating electrical power by wind power,
a tower with a platform, and
an ammonia production apparatus arranged on the platform for producing ammonia by means of the generated electrical power.

Thus, electrical power produced by the wind turbine (i.e. by the generator of the wind turbine) can be converted on-site into ammonia. Hence, so-called green ammonia can be produced at the location of the offshore wind turbine. Green ammonia is ammonia produced from renewable energies such as wind power for replacing fossil fuels.

Hence, the energy delivered and/or output by the offshore wind turbine is provided (at least partly) in the form of green ammonia.

Having an offshore wind turbine delivering and/or outputting green ammonia - instead of green hydrogen - is of advantage as ammonia can be more easily stored and transported compared to hydrogen.

Ammonia is a globally handled commodity chemical with over 180 million tons produced every year. Its production, transportation, storage and use are well-known commercial processes with well-established safety practices. Unlike hydrogen, which require very low temperatures (e.g., -253 °C) or very high pressures (> 300 bar) to store significant amounts volumetrically, ammonia can be stored in liquid form with relative ease by implementing 8-10 bar pressure or cooling below -33.5 °C. Moreover, hydrogen has a very broad flammability range, which adds to the safety challenges in comparison to ammonia.

The offshore wind turbine is an apparatus to convert the wind's kinetic energy into electrical energy (electrical power). The wind turbine comprises, for example, a rotor having one or more blades connected each to a hub, a nacelle including the generator, and the tower holding, at its top end, the nacelle. The tower of the wind turbine is mechanically connected to a foundation fixed to the seabed. The foundation may include a monopile, a tripod and/or a floating foundation.

The wind turbine is an offshore wind turbine. Offshore includes marine environments as well as lakes and other open waters.

The platform on which the ammonia production apparatus is arranged is, for example, an outside platform of the tower. The platform on which the ammonia production apparatus is arranged is, for example, attached to an outside wall of the tower.

The platform on which the ammonia production apparatus is arranged, is, for example, an extended boat landing platform of the tower. However, the platform on which the ammonia production apparatus is arranged, can also be another platform of the wind turbine.

Having the ammonia production apparatus arranged on the platform of the tower of the wind turbine provides a decentralized offshore ammonia production turbine which is a novel solution for offshore green ammonia production on a decentralized platform level.

"Producing ammonia by means of the generated electrical power" includes producing ammonia indirectly or directly by means of the generated electrical power. When producing ammonia indirectly by means of the generated electrical power, ammonia is produced from the generated electrical power via the production of hydrogen gas. In this case, the wind turbine comprises, for example, a hydrogen production apparatus. Further, in this case, the ammonia production apparatus is configured for producing ammonia by synthesis of hydrogen and nitrogen. Alternatively, ammonia can be produced directly by means of the generated electrical power by applying an electrochemical process.

According to an embodiment, the ammonia production apparatus comprises one or more nitrogen production units, one or more ammonia reactor units for ammonia synthesis, one or more cooling units, one or more compressor units, one or more mixing units and/or one or more condenser units.

The nitrogen production units are configured for producing nitrogen from air. A nitrogen production unit typically comprises an air separation unit (e.g., cryogenic distillation, pressure swing adsorption, membrane separation) and may be coupled with purification and compression units as needed.

The one or more ammonia reactor units are configured for producing ammonia by synthesis of hydrogen and nitrogen at high temperatures (e.g., 150 to 600°C).

The one or more cooling units are, for example, configured to cool one or more units (e.g., compressor units, reactor units) of the ammonia production apparatus. In addition or instead, the one or more cooling units are, for example, configured to cool the produced ammonia. The one or more cooling units are, for example, fluidly connected to a water-intake device taking in water from the sea or another open water reservoir. The one or more cooling units may, for example, be fluidly connected to the water-intake device via one or more desalination units for desalinating sea water.

The one or more compressor units are, for example, configured for compressing the produced (liquid or gaseous) ammonia. In addition or instead, the one or more compressor units are, for example, configured for compressing the produced hydrogen and/or nitrogen.

The one or more mixing units are, configured for mixing precursor components for the ammonia production such as nitrogen and hydrogen.

The one or more condenser units are configured for condensing gas into liquid, for example for condensing gaseous ammonia into liquid ammonia.

According to a further embodiment, the offshore wind turbine comprises an ammonia storage unit for storing the produced ammonia, wherein the ammonia storage unit is fluidly connected to the ammonia production apparatus.

Having the ammonia storage unit located at the offshore wind turbine allows to store the produced ammonia directly at the wind turbine. The ammonia is stored in the ammonia storage unit, for example, in a gaseous state or in a liquid state.

Further, having the ammonia storage unit, the offshore wind turbine may be configured as a stand-alone offshore installation without any electrical or pipe connection to other offshore or onshore installations. In other words, the electrical energy produced by the wind turbine may be fully converted into ammonia and stored for a significant time period (e.g., several months and/or years) in the ammonia storage unit of the offshore wind turbine. The offshore wind turbine may then be approached, for example by a vessel, only once in said time period for emptying the ammonia storage of the offshore wind turbine.

For example, providing a wind farm comprising a large number of offshore wind turbines each having its own ammonia production apparatus and ammonia storage unit simplifies the installation of a wind farm and the related costs dramatically. In particular, cabling and/or piping of the offshore wind turbines may be omitted completely, or partially (e.g., when only some array cabling or piping is installed).

The ammonia storage unit is, for example, fluidly connected to the ammonia production apparatus by means of one or more pipes (e.g., fluid pipes, ammonia pipes, pipes for liquid/gaseous ammonia). The ammonia storage unit comprises, for example, one or more ammonia tanks each being fluidly connected to the ammonia production apparatus.

In other aspects, an offshore wind turbine arrangement is provided comprising an offshore wind turbine as described above or below. The offshore wind turbine arrangement comprises in addition, for example, a further offshore installation (i.e. separate from said offshore wind turbine) having an own foundation configured for being fixed to the seabed and a platform. Furthermore, the offshore wind turbine arrangement may comprise an ammonia storage unit arranged on the platform of the further offshore installation, the ammonia storage unit being fluidly connected to the ammonia production apparatus of the offshore wind turbine.

According to a further embodiment, the offshore wind turbine comprises a foundation for being fixed to the seabed, wherein the tower is mechanically connected to the foundation, and the ammonia storage unit is arranged inside the foundation.

The ammonia storage unit is, for example, arranged inside an inner cavity of the foundation.

The foundation comprises, for example, a hollow tube section with an inner cavity. Further, the ammonia storage unit (e.g., the one or more tanks of the ammonia storage unit) are, for example, accommodated inside the hollow tube section (e.g., within the inner cavity of the tube section).

The foundation includes, for example, a monopile, a tripod and/or another foundation driven into the seabed. Alternatively, the foundation may also include a floating foundation anchored to the seabed by one or more anchors.

According to a further embodiment, the ammonia storage unit has a storage capacity for storing ammonia of 1000 m³ or more, 2000 m³ or more, 3000 m³ or more, 4000 m³ or more, 5000 m³ or more and/or 6000 m³ or more.

Thus, a sufficiently large storage capacity can be provided for storing the energy produced by the wind turbine within a significant fraction of time such as several months and/or years in form of ammonia.

The storage capacity of the ammonia storage unit is, in particular, a capacity for storing ammonia in a liquid or gaseous phase.

In embodiments, the ammonia is stored as liquid in a high-pressurized state in the ammonia storage unit. The ammonia stored in the ammonia storage units has, for example, a pressure of 10 bar or more, 15 bar or more, and/or 20 bar or more. The ammonia stored in the ammonia storage units has, for example, a pressure in the range of 10 to 30 bar and/or 16 to 25 bar. In this embodiment, the ammonia production apparatus comprises, for example, one or more compressor units for compressing the produced ammonia to said pressure values.

In embodiments, the ammonia is stored as liquid in a medium-pressurized and medium-cooled state in the ammonia storage unit. The ammonia stored in the ammonia storage units has, for example, a pressure in the range of 2 to 6 bar and/or 3 to 5 bar. Furthermore, the ammonia stored in the ammonia storage unit has, for example, a temperature in the range of 0 to -5°C, 0 to -3°C, 0 to -2°C and/or 0 to -1°C. In this embodiment, the ammonia production apparatus comprises, for example, one or more compressor units for compressing the produced ammonia to said pressure values and/or one or more cooling units for cooling the produced ammonia to said temperature values.

In embodiments, the ammonia is stored as liquid in a low-pressurized and highly cooled state in the ammonia storage unit. The ammonia stored in the ammonia storage units has, for example, a pressure in the range of 1 to 2 bar, 1 to 1.5 bar and/or 1.1 to 1.5 bar. Furthermore, the ammonia stored in the ammonia storage unit has, for example, a temperature of -10°C or less, -20°C or less, -30°C or less and/or -33°C or less. In this embodiment, the ammonia production apparatus comprises, for example, one or more compressor units for compressing the produced ammonia to said pressure values and/or one or more cooling units for cooling the produced ammonia to said temperature values.

According to a further embodiment, the offshore wind turbine comprises a hydrogen production apparatus for producing hydrogen gas by means of the generated electrical power, wherein the ammonia production apparatus is fluidly connected to the hydrogen production apparatus for producing ammonia based on the produced hydrogen gas.

Having - in addition to the ammonia production apparatus - also a hydrogen production apparatus at the wind turbine allows to directly use the produced hydrogen for the ammonia production.

By the direct feed of hydrogen gas into the ammonia production apparatus (e.g., into one or more mixing units of the ammonia production apparatus) a contamination of hydrogen gas is reduced or avoided, since the compression step in between can be omitted which may lead to exposure to oil-based contaminants.

The ammonia production apparatus is, in particular, fluidly connected to the hydrogen production apparatus for delivering the hydrogen gas produced by the hydrogen production apparatus to the ammonia production apparatus for producing ammonia based on the delivered hydrogen gas.

The hydrogen production apparatus is, in particular, configured for producing hydrogen gas by converting water into hydrogen by means of electrical power generated by the generator of the wind turbine. Thereby, water is separated into hydrogen and oxygen by an electrolysis process.

The hydrogen production apparatus comprises, for example, one or more electrolysis units for producing hydrogen gas, one or more compressor units for compresses the produced hydrogen gas, one or more cooling units for cooling components of the hydrogen production apparatus, a water-intake apparatus for taking in water from the sea and/or an open water reservoir and supplying the water to the hydrogen production apparatus, and/or one or more desalination units for desalinating sea water.

The water-intake apparatus may, for example, be fluidly connected with the at least one electrolysis unit for supplying water to the at least one electrolysis unit for converting the supplied water into hydrogen. Further, the water may be desalinated before supplying the water to the at least one electrolysis unit for converting the desalinated water into hydrogen.

Further, the hydrogen production apparatus comprises, for example, one or more cooled components and at least one cooling unit for cooling the one or more cooled components by means of a cooling liquid, and the water-intake apparatus may be fluidly connected with the at least one cooling unit for supplying water as the cooling liquid to the at least one cooling unit.

The ammonia is, in particular, produced by means of a synthesis from hydrogen gas and nitrogen gas.

For example, the precursor nitrogen and hydrogen gases are injected into a gas mixer at a predetermined stoichiometric ratio H2:N2. Further, the mixture of the nitrogen and hydrogen gases is, for example, compressed (e.g., to a pressure between 20 and 300 bar). Based on the requirements from the ammonia reactor unit, additional drying and purification steps can be added to the process before injection into the reactor unit. To provide initial heat to the reactor unit, an electric heater or hydrogen boiler can be employed.

The ammonia production apparatus may, for example, be configured to produce ammonia by a standard Haber-Bosch process. This typically includes a recycling loop to isolate produced ammonia from the reaction mixture (adsorption process), where a pressurized mixture of nitrogen and hydrogen gases are injected to the reactor unit typically at the stoichiometric ratio of 3:1. The reaction equilibrium for NH₃ generation is as follows:

N₂ + 3H₂ → 2NH₃ ΔH° = -91.8 kJ/mol

This standard synthesis loop usually requires a relatively high temperature (e.g., 200°C or more) and pressure (e.g., 150 bar or more). Hence, a fast ramp up and/or ramp down of ammonia production following the intermittent energy production of a wind turbine is difficult.

The ammonia production apparatus may, for example, be configured to produce ammonia by an improved Haber-Bosch process. This solution implements catalysts that are capable of activating ammonia synthesis at lower pressures (e.g., 100 bar or smaller) in a Haber-Bosch process. Thus, hydrogen gas produced at a pressurized electrolysis unit (having a pressure of 20 bar or more) can be directly integrated in synthesis reaction without further compression. In addition to the state of art condensation systems, this solution may also employ an absorption-based separation concept for the produced ammonia, which is beneficial in controlling the reactor start-up/shut-down.

According to a further embodiment, the offshore wind turbine comprises a further platform, wherein the hydrogen production apparatus is arranged on the further platform, and the further platform is arranged at the outside of the tower or at the outside of a nacelle of the wind turbine.

In a case in which the further platform is arranged at the outside of the tower of the wind turbine, the further platform may be arranged (e.g., attached) at an outer wall of the tower. Moreover, the further platform may be arranged at a larger height - with respect to a height direction of the wind turbine - than the platform on which the ammonia production apparatus is arranged.

Alternatively, the further platform may be arranged at the outside of the nacelle. In this case, the further platform may be arranged (e.g., attached) to an outer wall of a housing of the nacelle. For example, the further platform may be arranged on top of the nacelle, e.g., as an open balcony on top of the nacelle.

The wind turbine may, for example, comprise a hydrogen production platform module comprising the further platform and connection means for connecting the module to a top portion of the nacelle (e.g., of an upper wall of the housing of the nacelle).

According to a further embodiment, the ammonia production apparatus is configured for producing ammonia directly from the electrical power generated by the generator by an electrochemical process.

Thus, the electrical power generated by the wind turbine (i.e. the generator of the wind turbine) can be directly used for producing ammonia without hydrogen production as an intermediate step. In this case, the electrochemical reaction comprises, for example, water oxidation for producing protons (H⁺) and nitrogen reduction reaction to form the final product ammonia NH₃.

In embodiments, the hydrogen production apparatus may be configured for both producing ammonia indirectly via synthesis from hydrogen and nitrogen (i.e. producing hydrogen gas by means of the generated electrical power and producing ammonia based on the produced hydrogen gas) and producing ammonia directly by an electrochemical process directly using the electrical power generated by the wind turbine. For example, the hydrogen production apparatus may comprise one or more first ammonia production devices for producing ammonia via synthesis from hydrogen and nitrogen and one or more second ammonia production devices for producing ammonia directly by an electrochemical process.

According to a further embodiment, the offshore wind turbine comprises an ammonia storage unit for storing the produced ammonia, and an ammonia fueling device for providing the stored ammonia to ammonia-powered vessels, the ammonia fueling device being fluidly connected to the ammonia storage unit.

Thus, the green ammonia produced by the offshore wind turbine can be directly used as fuel for an ammonia-powered vessel approaching the offshore wind turbine.

In embodiments in which an offshore wind turbine arrangement is provided, comprising an offshore wind turbine as described above or below, and a further offshore installation (i.e. separate from said wind turbine) with an own foundation configured for being fixed to the seabed and a platform, the ammonia storage unit may be arranged on the platform of the further offshore installation.

According to a further embodiment, the offshore wind turbine comprises:
an ammonia storage unit for storing the produced ammonia,
an ammonia cracking unit for converting ammonia stored in the ammonia storage unit into hydrogen gas, the ammonia cracking unit being fluidly connected to the ammonia storage unit, and
a hydrogen fueling device for providing hydrogen gas to hydrogen-powered vessels, the hydrogen fueling device being fluidly connected to the ammonia cracking unit.

Thus, the green ammonia produced by the offshore wind turbine can be converted by the cracking unit to hydrogen and the hydrogen can be directly used as fuel for a hydrogen-powered vessel approaching the offshore wind turbine.

In embodiments in which an offshore wind turbine arrangement is provided, comprising an offshore wind turbine as described above or below, and a further offshore installation (i.e. separate from said wind turbine) with an own foundation configured for being fixed to the seabed and a platform, the ammonia cracking unit and/or the hydrogen fueling device may be arranged on the platform of the further offshore installation.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows an offshore wind turbine according to an embodiment;
Fig. 2 shows an ammonia production apparatus of the wind turbine of Fig. 1;
Fig. 3 shows a partial view of an offshore wind turbine according to a further embodiment;
Fig. 4 shows a partial view of an offshore wind turbine according to a further embodiment;
Fig. 5 shows a partial view of an offshore wind turbine according to a further embodiment;
Fig. 6 shows an offshore wind turbine according to a further embodiment;
Fig. 7 shows an offshore wind turbine according to a further embodiment;
Fig. 8 shows an offshore wind turbine according to a further embodiment;
Fig. 9 shows an ammonia fueling device of an offshore wind turbine according to a further embodiment; and
Fig. 10 shows a hydrogen fueling device of an offshore wind turbine according to a further embodiment.

In the Figures, like reference numerals designate like or functionally equivalent elements, unless otherwise indicated.

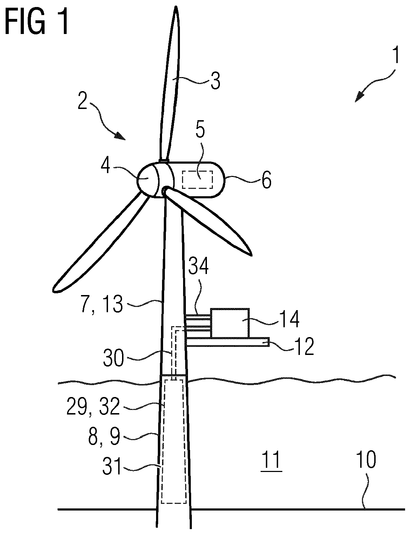

Fig. 1 shows an offshore wind turbine 1 according to an embodiment. The wind turbine 1 comprises a rotor 2 having one or more blades 3 connected to a hub 4. The hub 4 is connected via a rotation shaft (not shown) to a generator 5 arranged inside a nacelle 6. During operation of the wind turbine 1, the blades 3 are driven by wind to rotate and the wind's kinetic energy is converted into electrical energy (electrical power) by the generator 5 in the nacelle 6. The nacelle 6 is arranged at the upper end of a tower 7 of the wind turbine 1. The tower 7 is erected on a foundation 8 such as a monopile 9 driven into a seabed 10. The reference sign 11 denotes sea water.

The wind turbine 1 further comprises a platform 12. The platform is, in particular, an outside platform 12 of the tower 7. The platform 12 is, for example, arranged at (e.g., attached to) an outer wall 13 of the tower 7 of the wind turbine 1.

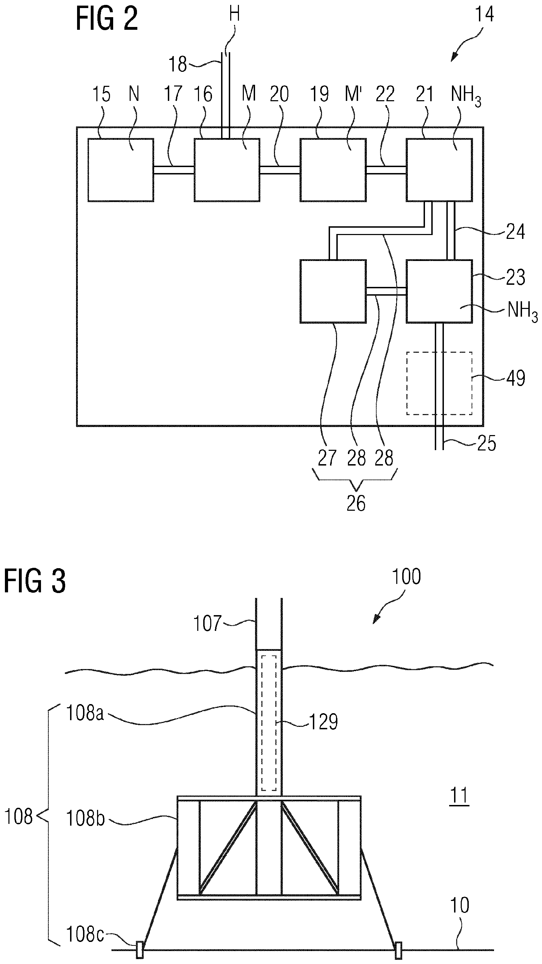

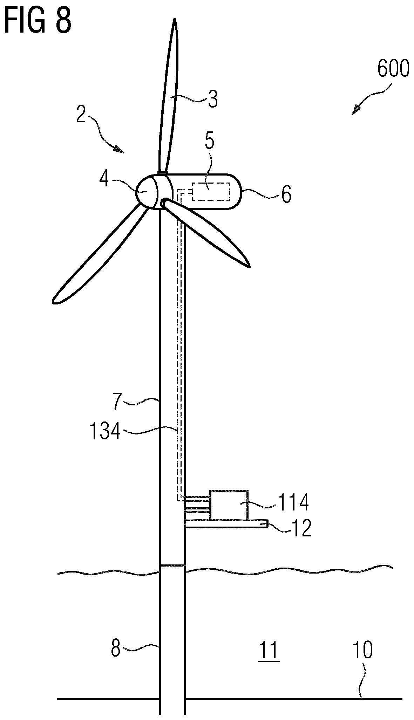

The wind turbine 1 further comprises an ammonia production apparatus 14 for producing ammonia NH₃ by means of the electrical power generated by the generator 5. The ammonia production apparatus 14 may be configured to produce ammonia NH₃ by using the generated electrical power in an indirect manner (via the production of hydrogen gas, see Figs. 2, 6 and 7) or in a direct manner (by an electrochemical process, see Fig. 8) .

In Fig. 2, an enlarged view of an ammonia production apparatus 14 according to an embodiment is displayed. In this embodiment, ammonia NH₃ is produced by synthesis of hydrogen H and nitrogen N.

As shown in Fig. 2, the ammonia production apparatus 14 may comprise several optional units and components. The ammonia production apparatus 14 comprises, for example, one or more nitrogen production units 15 for producing nitrogen gas N. The ammonia production apparatus 14 comprises, for example, one or more mixing units 16 for mixing nitrogen gas N and hydrogen gas H. The one or more mixing units 16 may be fluidly connected to the nitrogen production unit(s) 15 by means of one or more pipes 17. Furthermore, one or more pipes 18 may be fluidly connected to the mixing unit(s) 16 for providing the hydrogen gas H. In the mixing unit(s) 16, a hydrogen-nitrogen mixture M (e.g., with 30 bar) may be produced.

The ammonia production apparatus 14 further comprises, for example, one or more compressor units 19 for compressing the hydrogen-nitrogen mixture M (e.g., to a mixture M' with a pressure of up to 300 bar). The compressor unit(s) 19 is, for example, fluidly connected to the mixing unit(s) 16 via one or more pipes 20.

The ammonia production apparatus 14 comprises, for example, one or more ammonia reactor units 21 for synthesis of ammonia NH₃ from the (e.g., pressurized) mixture M, M' of hydrogen H and nitrogen N. The ammonia reactor unit(s) 21 are fluidly connected to the compressor unit(s) 19 by means of one or more pipes 22.

Furthermore, the ammonia production apparatus 14 comprises, for example, one or more condenser and separator units 23 for liquefaction of ammonia NH₃. The condenser and separator unit(s) 23 are fluidly connected to the reactor unit(s) 21 by one or more pipes 24. The liquid ammonia NH₃ may be delivered by one or more pipes 25, for example, to a storage 29 (Fig. 1).

The ammonia production apparatus 14 may comprise in addition, for example, a return line 26 for returning a portion of the ammonia NH₃ which has not been liquified in the condenser and separator unit(s) 23 back to the reactor unit(s) 21. The return line 26 may comprise one or more further compressor units 27 for compressing the ammonia NH₃ (e.g., to a pressure of 300 bar) as well as pipes 28 for fluid connection of the further compressor unit(s) 27 with the condenser and separator unit(s) 23 and the ammonia reactor unit(s) 21.

As shown in Fig. 1, the offshore wind turbine 1 may optionally comprise an ammonia storage unit 29 for storing the produced ammonia NH₃. The ammonia storage unit 29 is fluidly connected (e.g., by a pipe 30) with the ammonia production apparatus 14. Thus, ammonia NH₃ produced in the ammonia production apparatus 14 can be transported to the ammonia storage unit 29.

The ammonia storage unit 29 is, for example, arranged inside the foundation 8 of the wind turbine, as shown in Fig. 1. The foundation 8 includes, for example, a monopile 9. The monopile comprises, for example, a hollow tube with an inner cavity 31. Further, the ammonia storage unit 29 (e.g., one or more tanks 32 of the storage unit 29) is, for example, arranged in the inner cavity 31 of the monopile 9.

The ammonia storage unit 29 may have a large storage capacity for storing a large amount of liquid ammonia NH₃. The storage capacity of the storage unit 29 is, for example, 1000 m³ or more, 2000 m³ or more, 3000 m³ or more, 4000 m³ or more, 5000 m³ or more and/or 6000 m³ or more. The storage capacity of the ammonia storage unit 29 may be large enough to store the total amount of energy produced by the wind turbine 1 within a time period of several months or years in the form of liquid ammonia NH₃.

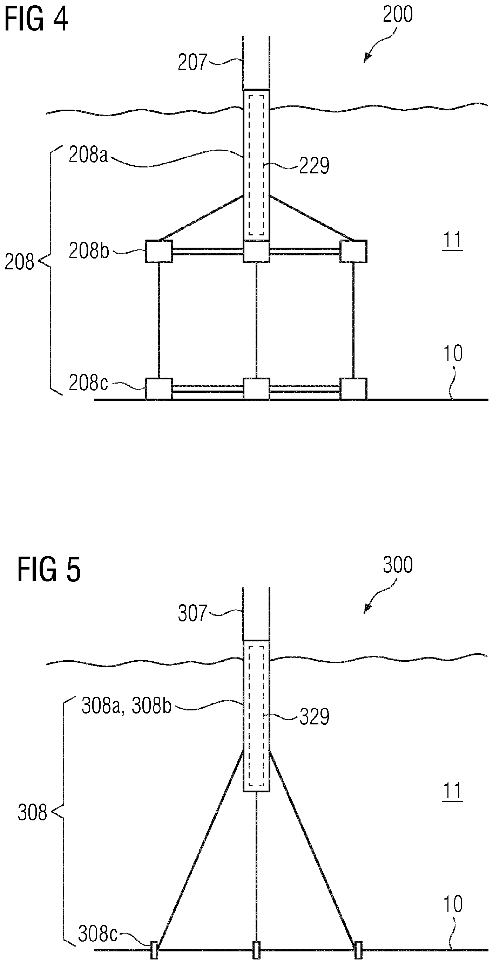

Fig. 3 to 5 show further embodiments of wind turbines 100, 200, 300 having floating foundations 108, 208, 308. Further, a respective ammonia storage unit 129, 229, 329 is arranged inside a portion of the respective floating foundation 108, 208, 308.

In particular, each of Figs. 3 to 5 shows a portion of the tower 107, 207, 307 of the respective wind turbine 100, 200, 300. Furthermore, each floating foundation 108, 208, 308 comprises a tube structure 108a, 208a, 308a, a buoyancy structure 108b, 208b, 308b and an anchoring structure 108c, 208c, 308c. As shown, the respective ammonia storage unit 129, 229, 329 is accommodated inside (i.e. in an inner cavity of) the respective tube structure 108a, 208a, 308a. Further, the buoyancy structure 108b, 208b, 308b is (e.g., partly) submerged into the sea water 11 (as shown) and/or floating on the sea water 11 (not shown) and provides buoyancy to the floating foundation 108, 208, 308. The anchoring structure 108c, 208c, 308c includes ropes, chains or the like connected to anchors anchored to the seabed 10.

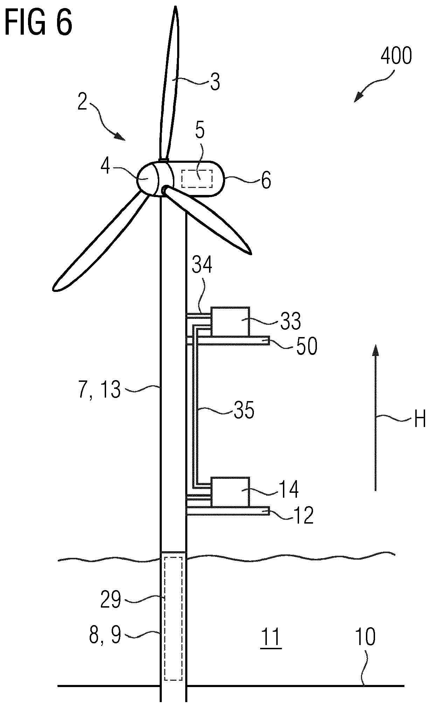

Fig. 6 shows a wind turbine 400 according to another embodiment. In the following, only difference to the wind turbine 1 shown in Fig. 1 are described.

The wind turbine 400 comprises a hydrogen production apparatus 33 for producing hydrogen gas H by means of the electrical power generated by the generator 5 inside the nacelle 6. The hydrogen production apparatus 33 is, in particular, electrically connected (e.g., by means of an electrical cable 34, only partly shown in Fig. 6) to the generator 5 of the wind turbine 400 for delivering the electrical power generated by the generator 5 to the hydrogen production apparatus 33. Furthermore, the ammonia production apparatus 14 is fluidly connected (e.g., by means of a pipe 35) to the hydrogen production apparatus 33 for delivering hydrogen gas H produced by the hydrogen production apparatus 33 directly to the ammonia production apparatus 14. The ammonia NH₃ is then produced by the ammonia production apparatus 14 by synthesis of hydrogen gas H and nitrogen gas N (Fig. 2), for example based on a Haber-Bosch process.

The wind turbine 400 comprises, in particular, a further platform 50 on which the hydrogen production apparatus 33 is arranged. The further platform 50 is, for example, arranged and attached at the outside wall 13 of the tower 7. The further platform 50 is, for example, arranged at a larger height than the platform 12 on which the ammonia production apparatus 14 is arranged. The larger height is a larger height with respect to a height direction H of the wind turbine 1. The ammonia production apparatus 14 in Fig. 6 comprises, for example, some or all of the units 15, 16, 19, 21, 23, 27 and the corresponding pipe connections shown in Fig. 2.

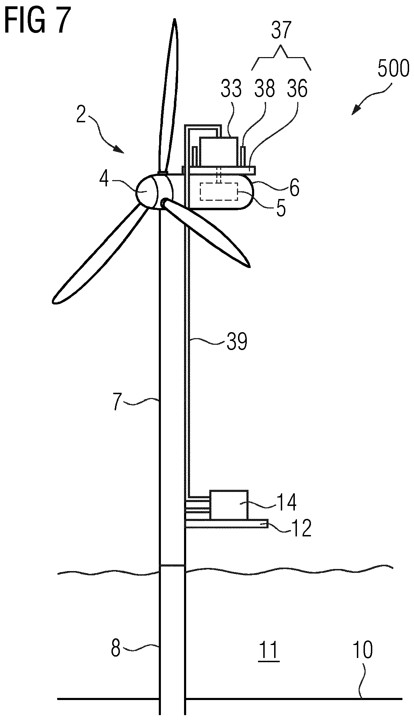

Fig. 7 shows a variant of the wind turbine 400 of Fig. 6. In the variant of Fig. 7, the wind turbine 500 comprises a further platform 36 for the hydrogen production apparatus 33, the further platform 36 being arranged and attached at the outside of the nacelle 6 (e.g., the outside of a housing of the nacelle 6). In the example of Fig. 7, the hydrogen production platform 36 is arranged on top of the nacelle 6 and configured as an open balcony 37 having, for example, a balustrade 38.

As in Fig. 6, the ammonia production apparatus 14 is fluidly connected (e.g., by means of a pipe 39) to the hydrogen production apparatus 33 for delivering hydrogen gas H produced by the hydrogen production apparatus 33 directly to the ammonia production apparatus 14. The pipe 39 including its routing is shown only schematically in Fig. 7 for illustration purposes. The pipe 39 may be guided in a different way, e.g., along a different route.

Fig. 8 shows another embodiment of an offshore wind turbine 600. In the following, only differences to the wind turbine 1 of Fig. 1 are described. In Fig.8, the ammonia production apparatus 114 is configured for producing ammonia NH₃ directly from the electrical power generated by the generator 5 inside the nacelle 6 (i.e. without hydrogen production as an intermediate step). In particular, the ammonia production apparatus 114 is configured for producing ammonia NH₃ by an electrochemical process. The ammonia production apparatus 114 is, in particular, electrically connected by means of an electrical cable 134 with the generator 5 for delivering electrical power generated by the generator 5 to the ammonia production apparatus 114. The delivered electrical power is then converted by the ammonia production apparatus 114 to ammonia NH₃.

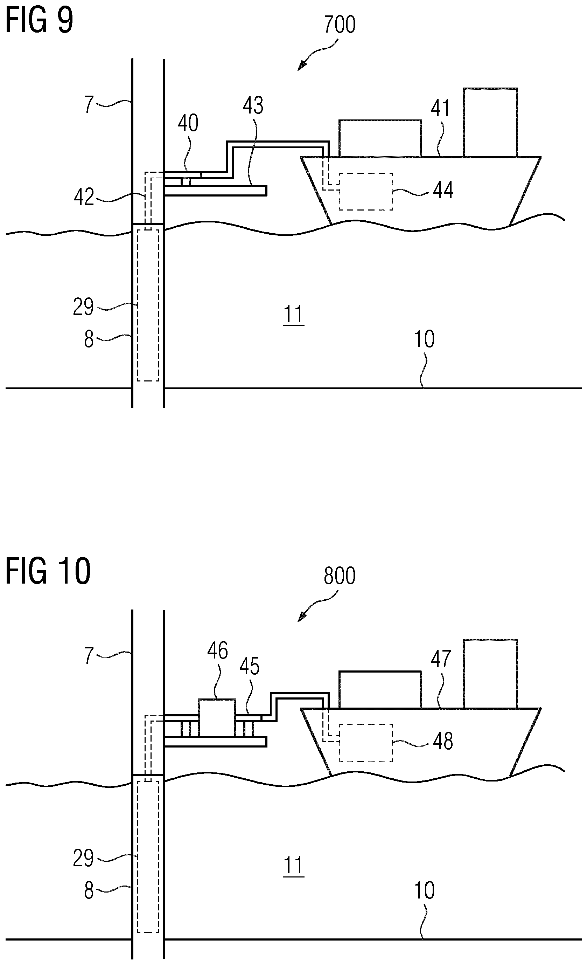

As shown in Fig. 9, an offshore wind turbine 700 with an ammonia storage unit 29 may comprise in addition an ammonia fueling device 40 for providing the stored liquid ammonia NH₃ to ammonia-powered vessels 41. Thus, the green ammonia NH3 produced by the offshore wind turbine 700 can be directly used as fuel for an ammonia-powered vessel 41.

The ammonia fueling device 40 is, in particular, fluidly connected to the ammonia storage unit 29 (e.g., by means of a pipe 42). The ammonia fueling device 40 may comprise a spigot, a pump and the like. The ammonia fueling device 40 is, for example, arranged on a further platform 43 (e.g., a boat-landing platform) of the wind turbine tower 7. The ammonia-powered vessel 41 comprises, for example, an ammonia tank 44 which can be filled with the ammonia NH3 provided by means of the ammonia fueling device 40 from the ammonia storage unit 29 of the wind turbine 700.

As shown in Fig. 10, an offshore wind turbine 800 with an ammonia storage unit 29 may in addition comprise a hydrogen fueling device 45 and an ammonia cracking unit 46 for converting the stored ammonia NH₃ to hydrogen gas H and providing the hydrogen gas H to hydrogen-powered vessels 47. The hydrogen fueling device 45 comprises, for example, a spigot, pump and the like. The hydrogen-powered vessel 47 has, in particular, a hydrogen tank 48. Thus, the green ammonia NH₃ produced by the offshore wind turbine 800 can be converted to hydrogen H and the hydrogen H can be directly used as fuel for a hydrogen-powered vessel 47.

It is noted that any of the herein described wind turbines 1, 100-800 may optionally comprise an ammonia fueling device 40 as shown in Fig. 9 and/or a hydrogen fueling device 45 and an ammonia cracking unit 46 as shown in Fig. 10.

Although the present invention has been described in accordance with preferred embodiments, it is obvious for the person skilled in the art that modifications are possible in all embodiments.

## Claims

1. An offshore wind turbine (1), comprising
a generator (5) for generating electrical power by wind power,
a tower (7) with a platform (12), and
an ammonia production apparatus (14) arranged on the platform (12) for producing ammonia (NH₃) by means of the generated electrical power.

2. The offshore wind turbine according to claim 1, wherein the ammonia production apparatus (14) comprises one or more nitrogen production units (15), one or more ammonia reactor units (21) for ammonia synthesis, one or more cooling units (49), one or more compressor units (19), one or more mixing units (16) and/or one or more condenser units (23).

3. The offshore wind turbine according to claim 1 or 2, comprising an ammonia storage unit (29) for storing the produced ammonia (NH₃) , wherein the ammonia storage unit (29) is fluidly connected to the ammonia production apparatus (14).

4. The offshore wind turbine according to claim 3, comprising a foundation (8, 108, 208, 308) for being fixed to the seabed (10), wherein
the tower (7) is mechanically connected to the foundation (8, 108, 208, 308), and
the ammonia storage unit (29) is arranged inside the foundation (8, 108, 208, 308).

5. The offshore wind turbine according to claim 3 or 4, wherein the ammonia storage unit (29) has a storage capacity for storing ammonia (NH₃) of 1000 m³ or more, 2000 m³ or more, 3000 m³ or more, 4000 m³ or more, 5000 m³ or more and/or 6000 m³ or more.

6. The offshore wind turbine according to one of claims 1 to 5, comprising a hydrogen production apparatus (33) for producing hydrogen gas (H) by means of the generated electrical power, wherein the ammonia production apparatus (14) is fluidly co
#nnected to the hydrogen production apparatus (33) for producing ammonia (NH₃) based on the produced hydrogen gas (H).

7. The offshore wind turbine according to claim 6, comprising a further platform (36, 50), wherein
the hydrogen production apparatus (33) is arranged on the further platform (36, 50), and
the further platform (36, 50) is arranged at the outside of the tower (7) or at the outside of a nacelle (6).

8. The offshore wind turbine according to one of claims 1 to 5, wherein the ammonia production apparatus (114) is configured for producing ammonia (NH₃) directly from the electrical power generated by the generator (5) by an electrochemical process.

9. The offshore wind turbine according to one of claims 1 to 8, comprising
an ammonia storage unit (29) for storing the produced ammonia (NH₃), and
an ammonia fueling device (40) for providing the stored ammonia (NH₃) to ammonia-powered vessels (41), the ammonia fueling device (40) being fluidly connected to the ammonia storage unit (29).

10. The offshore wind turbine according to one of claims 1 to 9, comprising
an ammonia storage unit (29) for storing the produced ammonia (NH₃),
an ammonia cracking unit (46) for converting ammonia (NH₃) stored in the ammonia storage unit (29) into hydrogen gas (H), the ammonia cracking unit (46) being fluidly connected to the ammonia storage unit (29), and
a hydrogen fueling device (45) for providing hydrogen gas (H) to hydrogen-powered vessels (47), the hydrogen fueling device (45) being fluidly connected to the ammonia cracking unit (46).
